# EUROPÄISCHE PATENTSCHRIFT

(11) **EP 2 330 075 B1**
(45) Veröffentlichungstag und Bekanntmachung des Hinweises auf die Patenterteilung: **04.11.2015**
(21) Anmeldenummer: 09014862.8
(22) Anmeldetag: 01.12.2009
(51) Int. Cl.: C01B 17/54, C01B 17/76

(54) **VERFAHREN ZUR HERSTELLUNG VON SCHWEFELSÄURE**
METHOD FOR MAKING SULPHURIC ACID
PROCÉDÉ DE FABRICATION D'ACIDE SULFURIQUE

(43) Veröffentlichungstag der Anmeldung: 08.06.2011
(73) Patentinhaber: Bayer Intellectual Property GmbH, 40789 Monheim (DE)
(72) Erfinder: Erkes, Bernd, 41379 Brüggen (DE); Kürten, Martin, 51465 Bergisch Gladbach (DE); Weber, Torsten, 42799 Leichlingen (DE); Förtsch, Dieter, Dr., 42799 Leichlingen (DE)
(74) Vertreter: BIP Patents

(56) Entgegenhaltungen:
- EP-A2- 1 295 849
- WO-A1-2008/052649
- WO-A2-2007/090671
- DE-B1- 2 501 419
- US-A- 3 803 297

## Beschreibung

Die vorliegende Erfindung betrifft das Gebiet der Schwefelsäureherstellung. Gegenstand der vorliegenden Erfindung ist ein Verfahren und eine Vorrichtung zur kontinuierlichen Herstellung von Schwefelsäure durch eine mehrstufige Umsetzung einer Schwefelverbindung wie beispielsweise Schwefel und/oder Schwefelwasserstoff mit Sauerstoff.

Schwefelsäure ist einer der bedeutendsten chemischen Grundstoffe und war bis vor einigen Jahren vielfach ein Gradmesser für die wirtschaftliche Entwicklung eines Landes (Sulfurie Acid and Sulfur Trioxide, H. Müller, in Ullmanns Encycl. of Industrial Chemistry, VCH, Weinheim, 2005).

Verwendung findet Schwefelsäure beispielsweise in der Herstellung von Düngemitteln, in der Petrochemie, der Raftinerietechnik, der Chemie, der Farbstoffherstellung, im Bereich des Erzaufschlusses und in der Metallurgie.

In Lehrbüchern der Chemie wird die Herstellung von Schwefelsäure im industriellen Maßstab als ein dreistufiges Verfahren beschrieben. Im ersten Schritt wird Schwefeldioxid erzeugt, das im zweiten Schritt zu Schwefeltrioxid oxidiert wird. Schwefeltrioxid bildet bei Einleiten in Wasser Schwefelsäure. Da die Reaktion zwischen Schwefeltrioxid und Wasser vergleichsweise langsam abläuft, wird Schwefeltrioxid üblicherweise im dritten Schritt des dreistufigen Verfahrens in Schwefelsäure geleitet.

Die Bildung von Schwefeldioxid erfolgt im industriellen Maßstab üblicherweise entweder durch Verbrennung von elementarem Schwefel oder durch Rösten von Sulfiden, die bei der Verhüttung von Erzen der Nichteisenmetalle (vor allem Kupfer, Zink und Blei) anfallen. Daneben gibt es eine Vielzahl von Prozessgasen, die Schwefeldioxid enthalten (z.B. Rauchgase, Spaltgase und FCC-Gas (fluidized-catalytic-cracking gas)).

Der Anteil aus Elementarschwefel eneugter, frischer Schwefelsäure hat im Verlauf der Jahre stetig zugenommen und beträgt mittlerweile über 60 % (Büchel, Moretto, Woditsch, Ind. Anorgan. Chemie, 3. Auflage, Wiley VCH, 1999). Ebenso kann Schwefeldioxid auch durch Verbrennung von Schwefelwasserstoff gebildet werden.

Die Verbrennung einer Schwefelverbindung zu Schwefeldioxid sollte mit einem hohen Anteil an Sauerstoff im Verbrennungsgas, vorzugsweise mit reinem Sauerstoff erfolgen. Die Verbrennung in Luft, wie sie beispielsweise in EP0762990B1 beschrieben ist, hat den Nachteil, dass Stickoxide entstehen, die entfernt werden müssen, um schädliche Emissionen zu vermeiden. Des Weiteren sind aufgrund des hohen Anteils an Stickstoff in der Luft große Apparateabmessungen und hohe Leistungen der Gebläse erforderlich.

Die Reaktion SO₂ + ½ O₂ SO₃ ist eine Gleichgewichtsreaktion, die nur bei niedrigen Temperaturen auf der Seite des gewünschten Schwefeltrioxids liegt. Bei niedrigen Temperaturen ist die Reaktionsgeschwindigkeit jedoch vergleichsweise gering, so dass eine direkte Oxidation von Schwefeldioxid nicht wirtschaftlich ist. Die Oxidation von Schwefeldioxid zu Schwefeltrioxid erfolgt im industriellen Maßstab daher durch beispielsweise ein katalysiertes Verfahren (Kontaktverfahren) oder ein Nitroseverfahren.

Die unterschiedlichen Modifikationen der Kontaktverfahren, bei denen ein schwefeldioxidhaltiges Gasgemisch mit Luft in Gegenwart eines Katalysators zu Schwefeltrioxid oxidiert und nachfolgend zu Schwefelsäure umgesetzt wird, haben dabei eine dominierende Bedeutung erlangt.

Im so genannten Doppelkontaktverfahren erfolgt nach einer ersten Umsetzung von Schwefeldioxid und Sauerstoff in einer ersten Kontaktstufe eine Zwischenabsorption des gewonnenen Schwefeltriox.ids, bevor das verbleibende Restgas nochmals über eine Kontaktschicht geleitet wird (siehe z.B. Auslegeschrift DE1181181B1). Hierdurch erreicht man höhere Umsätze des Schwefeldioxids von 99,7 % bis zu 99,9%.

Es wäre wünschenswert, Schwefelsäure in einem einzigen kontinuierlichen Verfahren durch zweistufige Oxidation einer Schwefelverbindung herstellen zu können, wobei tür die beiden Oxidationsschritte (Schwefelverbindung → Schwefeldioxid, Schwefeldioxid → Schwefeltrioxid) ein Verbrennungsgas mit einem hohen Anteil an Sauerstoff, vorzugsweise reiner Sauerstoff eingesetzt werden sollte.

Es ist derzeit jedoch keine industrielle Anlage bekannt, in der eine Schwefelverbindung wie elementarer Schwefel und/oder Schwefelwasserstoff in einem Verbrennungsgas mit einem hohen Anteil an Sauerstoff kontinuierlich zu Schwefelsäure umgesetzt wird.

Die direkte Umsetzung einer Schwefelverbindung wie elementarer Schwefel und/oder Schwefelwasserstoff zu Schwefelsäure in einem Verbrennungsgas mit einem hohen Anteil an Sauerstoff in einem kontinuierlichen Prozess unter wirtschaftlichen Bedingungen und unter Einhalt von Emissions- und Sicherheitsbestimmungen ist technisch schwierig.

Dies liegt unter anderem daran, dass die ersten beiden Verfahrensstufen - Herstellung von Schwefeldioxid und Oxidation des Schwefeldioxids zu Schwefeltrioxid - sinnvoll aufeinander abgestimmt werden müssen, um ein wirtschaftliches Verfahren zu realisieren. Die bei der Abstimmung auftretenden Probleme seien hier kurz skizziert.

Die Oxidation S0₂ + ½ O₂ → SO₃ erfolgt wie beschrieben üblicherweise katalytisch z.B. an einem handelsüblichen Vanadiuinpentoxid-Katalysator mit oder ohne Cäsium (z.B. SiO₂-getrrigertcr V₂O₅-Katalysator des Typs 04-110 der Firma BASF) in einem Temperaturfenster von T = 380°C - 650 °C. Es ist bekannt, dass bei T < 380°C der Katalysator nicht die erforderliche Zündtemperatur erreicht. Um sicherzugehen, dass der Katalysator in einem adiabat geführten Process anspringt und autothenn betrieben werden kann, muss die Gascintrittstemperatur daher T>380°C und der SO₂-Gehalt bei > ca. 4 Vol. % liegen.

Weiterhin ist bekannt, dass der Katalysator bei T 630°C irreversibel geschädigt wird. Da die Oxidation von Schwefeldioxid mit Sauerstoff zu Schwefeltrioxid exotherm verläuft, wird die Konzentration an Schwefeldioxid und/oder Sauerstoff im Reaktionsgemisch niedrig gehalten. Zur Vermeidung der irreversiblen Schädigung des Katalysators werden nach dem Stand der Technik die bekannten Kontaktverfahren daher üblicherweise mit SO₂-Gehalten < 13,5 Vol. % im Ausgangsgas betrieben (siehe z.B. DE10249782A1).

In WO2008/052649A1 ist ein katalytisches Verfahren und eine Vorrichtung zur Oxidation von Schwefeldioxid beschrieben, in denen höhere Konzentrationen von Schwefeldioxid von bis zu 66 Vol,-% eingesetzt werden können. Dies wird durch die Verwendung eines so genannten Röhrenkontaktapparats erreicht. Ein Röhrenkontaktapparat ist ein stehender Wärmetauscher aus mehreren Doppetmantetrohren, die jeweils ein Innenrohr und ein Außenrohr aufweisen, wobei ein Katalysator in das Innenrohr eingefüllt ist, und die Wärmeübertragung um dieses Innenrohr/Reaktionsrohr durch ein vorzugsweise im Gleichstrom geführtes Kühlmedium im Zwischenraum aus Innen- und Außenrohr erfolgt. Durch die intensive Wärmeabfuhr kann eine ungewünschte Temperaturerhöhung in den Bereich der Katalysatorschädigung auch bei hohen Schwefetdioxidkonxentrationen wirksam verhindert werden.

Sollen Gasgemische mit einem Anteil von 30 bis 66 Vol. % Schwefeldioxid im Röhrcnkontaktapparat verarbeitet werden, so wird abhängig von der Gaszusammensetzung am Eingang dem Eingangsstrom Luft- und/oder technischer Sauerstoff beigegeben. Dabci beträgt üblicherweise das Volumenverhältnis von O₂ zu SO₂ im Kontaktgas 0,5 bis 1,2, vorzugsweise 0,7 bis 0,9.

Die Verbrennung der Schwefelverbindung zu Schwefeldioxid in der ersten Verfahrensstufe sollte also gemäß Stand der Technik so erfolgen, dass das erhaltene Gasgemisch eine Konzentration im Bereich von mehr als 4 Vol.-% und weniger als 66 Vol.% aufweist, um einer Kontaktanlage zur Oxidation mit vorzugsweise reinem Sauerstoffzugeführt werden zu können.

Die Verbrennung einer Schwefelverbindung wie beispielsweise elementarer Schwefel und/oder Schwefelwasserstoff ist ebenfalls exotherm. Um zu vermeiden, dass die bei der Reaktion frei werdende Wärme die Anlage oder Anlagenteile beschädigt (z.B. durch Eisensultidbildung) ist eine Temperaturbegrenzung erforderlich. Dazu wird in der Offenlegung DE10351808A1 vorgeschlagen, einen Teil des entstehenden SO₂ zur Verdünnung des Reaktionsgemisches zurückzuführen. Bei dem aus diesem Vorschlag resultierenden Verfahren werden ca. 80%-Gew. des aus der Brennkammer austretenden SO₂ als Kreisgas gefahren. Durch den hohen Anteil des Kreislaufgases sind hohe Leistungen der Gebläse und große Apparateabmessungen bzw. Rohrleitungsquerschnitte erforderlich, was zu einem unwirtschaftlichen Verfahren führen würde.

Würde das in DE10351808A1 vorgeschlagene Verfahren einer Kontaktanlage vorgeschaltet werden, so könnte nur ein kleiner Anteil (ca. 20%) des im ersten Schritt produzierten SO₂ ausgeschleust und einem nach dem Stand der Technik bekannten Kontaktverfahren zugeführt werden. Dieser kleine Anteil müsste zudem noch verdünnt werden, um den geforderten maximalen Volumenanteil an SO₂ nicht zu übersteigen.

DE2159789A1 offenbart die Verbrennung von Schwefel mit Sauerstoff zu SO₂ mit anschließender Umsetzung zu SO₃ zur Herstellung von Schwefelsäure. In einem Reaktor reagiert Schwefel mit reinem Sauerstoff in mehreren hintereinander angeordneten Kontaktstufen. Dabei wird das Gasgemisch nach jeder Stufe gekühlt. Mit dem in DE2159789A1 offenbarten Verfahren ist es jedoch nicht möglich, die katalytische Oxidation von Schwefeldioxid zu Schwefeltrioxid in nur einer einzigen Kontaktstufe auszuführen.

Daraus wird deutlich, dass es ein nicht triviales technisches Problem ist, die Verbrennung einer Schwefelverbindung wie elementarer Schwefel und/oder Schwefelwasserstoff in einem Verbrennungsgas mit einem hohen Anteil an Sauerstoff zu Schwefeldioxid und die Weiteroxidation zu Schwefeltrioxid in einem einzigen, kontinuierlichen und unter wirtschaftlichen Gesichtspunkten betreibbaren Gesamtverfahren zu integrieren.

Dabei hätte die Integration aller Verfahrensstufen in einem einzigen kontinuierlichen Prozess Vorteile. Wenn es gelänge, die Verfahrensstufen technisch und wirtschaftlich sinnvoll aufeinander abzustimmen, könnte Schwefelsäure bei einer im Vergleich zum Stand der Technik deutlich geringeren Kreislaufführung und damit in einer vergleichsweise kompakten Anlage ohne Zwischenlagerung von Zwischenprodukten (SO₂) besonders kostengünstig und nahezu emissionsfrei produziert werden.

Ausgehend vom beschriebenen Stand der Technik stellt sich daher die Aufgabe, ein kontinuierliches Verfahren und eine Vorrichtung zur Herstellung von Schwefelsäure ausgehend von einer verbrennbaren Schwefelverbindung wie beispielsweise elementarem Schwefel und/oder Schwefelwasserstoff bereitzustellen. Im Verfahren soll als Oxidationsmittel ein Verbrennungsgas mit einem hohen Anteil an reinem Sauerstoff eingesetzt, um zum einen schädliche Emissionen, die beispielsweise bei der Verwendung von Luft als Oxidationsmittel auftreten würden, gar nicht erst entstehen zu lassen. Zum anderen hätte ein Verbrennungsgas mit einem höheren Anteil an Sauerstoff als dem Anteil in Luft den Vorteil, dass die Apparatedimensionen reduziert werden können und geringere Gebläseleistungen erforderlich sind. In dem gesuchten Verfahren und der gesuchten Vorrichtung soll die Verbrennung einer Schwefelverbindung so erfolgen, dass das produzierte Schwefeldioxid direkt, das heißt ohne Reinigung, Verdünnung und/oder Aufkonzentration der nächsten Verfahrensstufe, der Umsetzung zu Schwefeltrioxid, zugeführt werden kann. Das Verfahren soll im industriellen Maßstab unter wirtschaftlichen Bedingungen zu betreiben sein.

Erfindungsgemäß wird diese Aufgabe durch ein Verfahren gemäß dem unabhängigen Anspruch 1 und eine Vorrichtung gemäß dem unabhängigen Anspruch 7 gelöst. Bevorzugte Ausführungsformen finden sich in den abhängigen Ansprüchen.

Ein erster Gegenstand der vorliegenden Erfindung ist damit ein kontinuierliches Verfahren zur Herstellung von Schwefelsäure ausgehend von elementarem Schwefel und/oder einer Schwefelverbindung und einem sauerstoffhaltigen Verbrennungsgas, umfassend die Schritte:
(a) Umsetzen des elementaren Schwefels und/oder der Schwefelverbindung mit einem Verbrennungsgas enthaltend Sauerstoff in einer Verbrennungskammer unter Bildung von Schwefeldioxid,
(b) katalytische Oxidation des Schwefeldioxids aus Schritt (a) unter Bildung von Schwefeltrioxid,
(c) Absorption und/oder Kondensation des Schwefeltrioxids aus Schritt (b) in Schwefelsäure, dadurch gekennzeichnet, dass die Umsetzung des elementaren Schwefels und/oder der Schwefelverbindung mit dem Verbrennungsgas enthaltend Sauerstoff in Schritt (a) in mehreren Zonen innerhalb der Verbrennungskammer stattfindet, wobei zwischen den Zonen Reaktionswärme aus der Umsetzung der Schwefelverbindung mit dem Verbrennungsgas enthaltend Sauerstoff abgeführt wird, so dass die Temperatur innerhalb der Verbrennungskammer 2000°C nicht übersteigt, dass Schritt (b) in einem Röhrenkontaktapparat in einer einzigen Kontaktstufe ausgeführt wird und ein Teil des nach der Absorption des Schwefeltrioxids in Schritt (c) resultierenden Gasstroms, der nicht umgesetzte Mengen an Schwefeldioxid und Sauerstoff enthält, in die Verbrennungskammer des Schritts (a) zurückgeführt wird, und wobei das Massenverhältnis von O₂ zu nicht für die Schwefelsäureherstellung nutzbaren Bestandteilen in dem Gasgemisch, das der Verbrennungskammer zugeführt wird, mindestens 30:70 beträgt.

Unter Schwefelsäure wird nachstehend jedes Gemisch oder jede Verbindung aus SO₃ und Wasser verstanden. Insbesondere wird nicht zwischen den Begriffen Schwefelsäure, konzentrierte Schwefelsäure, hochkonzentrierte Schwefelsäure, Oleum und Dischwefelsäure unterschieden. Der Begriff Schwefelsäure umfasst alle diese Begriffe.

Unter einer Schwefelverbindung wird hier eine schwefelhaltige Substanz oder ein schwefelhaltiges Substanzgemisch verstanden, die/das mit Sauerstoff unter Bildung von Schwefeldioxid umgesetzt werden kann. Beispiele für Schwefelverbindungen sind elementarer Schwefel, Schwefelwasserstoff, Kohlenstoffdisulfid (CS₂) und Kohlenoxisulfid (COS).

Elementarer Schwefel kann in Abhängigkeit der Umgebungsbedingungen wie Druck und Temperatur in verschiedenen Aggregatzuständen (fest, flüssig, gasförmig) und/oder Modifikationen vorliegen (bspw. orthorhombischer oder monokliner Schwefel). Wenn hier von Schwefel oder elementarem Schwefel die Rede ist, wird nicht zwischen derartigen Modifikationen unterschieden; vielmehr fallen alle denkbaren Aggregatzustände, Modifikationen und Gemische hiervon unter die hier verwendeten Begriffe.

Ferner sollen die hier verwendeten Begriffe wie z.B. Sauerstoff, Schwefelverbindung und Schwefel nicht so verstanden werden, dass diese Stoffe in reinem Zustand vorliegen. Wie dem Fachmann bekannt ist, weisen Stoffe je nach Herkunft und Herstellverfahren eine kleinere oder größere Menge an Verunreinigungen auf.

Ein kontinuierliches Verfahren im Sinne dieser Erfindung ist ein Verfahren, bei dem die Zugabe der Edukte in einen Reaktor und der Austrag der Produkte aus dem Reaktor gleichzeitig aber räumlich getrennt stattfinden, während bei einem diskontinuierlichen Verfahren die Reaktionsfolge Zugabe der Edukte, chemische Umsetzung und Austrag der Produkte zeitlich nacheinander ablaufen. Die kontinuierliche Verfahrensweise ist von wirtschaftlichem Vorteil, da Stillstandszeiten des Reaktors infolge von Befüllungs- und Entleerungsprozessen und lange Reaktionszeiten z.B. infolge sicherheitstechnischer Vorgaben oder infolge von Aufheiz- und Abkühlungsprozessen, wie sie bei Batch-Verfahren auftreten, vermieden werden.

Bei der Schwefelverbindung in Schritt (a) des erfindungsgemäßen Verfahrens handelt es sich bevorzugt um eine Substanz oder ein Substanzgemisch, die/das elementaren Schwefel und/oder Schwefelwasserstoff umfasst. Das Substanzgemisch weist vorzugsweise einen hohen Anteil an einer Schwefelverbindung auf, um den Anteil an Nebenprodukten, die bei der Verbrennung entstehen und die gegebenenfalls aus dem Produktgemisch entfernt und/oder entsorgt werden müssen, gering zu halten. Wird eine Schwefelverbindung umfassend Schwefelwasserstoff als Ausgangsstoff eingesetzt, kann bereits ein Anteil von 50 Gew.% H₂S zu einem wirtschaftlichen Verfahren führen. Vorzugsweise liegt der Anteil der Schwefelverbindung in dem Ausgangsstoff, der der Verbrennung zugeführt wird, oberhalb von 50 Gew.-%, besonders bevorzugt bei mindestens 90 Gew.-%, ganz besonders bevorzugt bei mindestens 95 Gew.-% und am meisten bevorzugt bei mindestens 98 Gew.-%.

Die Verbrennung von elementarem Schwefel hat den Vorteil, dass neben dem gewünschten Schwefeldioxid keine weiteren Produkte auftreten. Daher wird vorzugsweise eine Substanz oder ein Substanzgemisch mit einem hohen Anteil von mindestens 90 Gew.-%, besonders bevorzugt von mindestens 95 Gew.-%, ganz besonders bevorzugt von mindestens 98 Gew.-% an elementaren Schwefel als Schwefelverbindung eingesetzt.

Die Umsetzung der Schwefelverbindung in Schritt (a) erfolgt in einem Verbrennungsgas, das einen möglichst hohen Gehalt an Sauerstoff und einen möglichst geringen Gehalt an nicht für die Schwefelsäureherstellung nutzbaren Bestandteilen wie beispielsweise Stickstoff, Kohlendioxid, Wasser und/oder Edelgasen enthält, um schädliche Emissionen, große Apparatedimensionen und hohe Gebläseleistungen zu vermeiden. Die ungenutzten Bestandteile werden nachfolgend auch als X bezeichnet.

Das Massenverhältnis von O₂:X in dem Gasgemisch, das der Verbrennungskammer zugeführt wird, beträgt mindestens 30:70, bevorzugt mindestens 50:50, besonders bevorzugt mindestens 70:30, ganz besonders bevorzugt mindestens 90:10, am meisten bevorzugt mindestens 95:5.

Durch die vergleichsweise hohe Konzentration an Oxidationsmittel erfolgt die Verbrennung der Schwefelverbindung mit höherer Geschwindigkeit als bei einer Verbrennung in Luft und die resultierende Temperaturerhöhung ist größer. Es besteht die Gefahr, dass die Temperatur in der Verbrennungskammer auf Werte ansteigt, bei denen die Anlage oder Anlagenteile (Innenwandungen der Verbrennungskammer, Düsen für die Zugabe der Reaktionskomponenten etc.) beschädigt werden.

Erfindungsgemäß wird daher die Umsetzung der Schwefelverbindung mit Sauerstoff innerhalb der Verbrennungskammer auf mehrere Reaktionszonen verteilt. Zwischen diesen Reaktionszonen wird ein Teil der bei der Umsetzung entstehenden Reaktionswärme abgeführt, so dass die maximale Temperatur innerhalb der Verbrennungskammer einen Wert von 2000°C nicht übersteigt.

Die Formulierung, dass ein Teil der bei der Umsetzung entstehenden Reaktionswärme abgeführt wird, soll hier so verstanden werden, dass dieser Teil 100% oder weniger ausmacht.

Erfindungsgemäß wird die Verbrennung der Schwefelverbindung demnach so ausgeführt, dass die Reaktion nicht an einem einzigen (zusammenhängenden) Ort - nachfolgend auch als (Verbrennungs-) Zone bezeichnet - stattfindet, sondern auf mehrere Orte/Zonen innerhalb der Verbrennungskammer verteilt wird. Dadurch wird auch die Freisetzung der Reaktionswärme auf mehrere Zonen verteilt. In diesen Zonen wird ein entsprechender Bruchteil der Gesamtreaktionswärme frei. Dieser Bruchteil kann durch geeignete Maßnahmen besser abgeführt und die Temperatur in der Verbrennungskammer besser kontrolliert werden, als wenn der gesamte Reaktionsumsatz in einer einzigen zusammenhängenden Verbrennungszone stattfinden würde. Die Reaktionsorte/Verbrennungszonen sind dabei in der Weise voneinander separiert, dass zwischen den Zonen eine Wärmeabfuhr stattfindet. Die Separation der Reaktionszonen voneinander erfolgt erfindungsgemäß somit durch geeignete Mittel zur Abfuhr eines Teils der in den jeweiligen Zonen entstehenden Reaktionswärme, z.B. mittels Wärmeübertrager.

Die Verbrennungskammer weist vorzugsweise eine Anzahl von Verbrennungszonen im Bereich von 2 bis 8, besonders bevorzugt im Bereich von 3 bis 5 auf.

Die erfindungsgemäße Aufteilung der Gesamtreaktion zwischen der Schwefelverbindung und Sauerstoff auf mehrere parallel ablaufende Einzelreaktionen kann beispielsweise dadurch erreicht werden, dass ein Hauptgasstrom umfassend Sauerstoff durch die Verbrennungskammer geführt wird und an mehreren Stellen entlang der Strömungsrichtung diesem Gasstrom eine oder mehrere Schwefelverbindungen beispielsweise über Düsen zugegeben werden.

Die Umsetzung der Schwefelverbindung mit Sauerstoff erfolgt in unmittelbarer Nähe der Zugabestellen in den Verbrennungszonen. Erfindungsgemäß befinden sich zwischen den Verbrennungszonen Wärmetauscher, welche einen Teil der in einer Verbrennungszone frei werdenden Reaktionszone abführen.

Pro Verbrennungszone kann eine Schwefelverbindung oder können mehrere Schwefelverbindungen über eine oder mehrere Zugabestellen in die Verbrennungskammer gegeben werden.

Die Zahl der Zugabestellen pro Verbrennungszone liegt bevorzugt im Bereich von 1 bis 8, besonders bevorzugt im Bereich von 2 bis 6, ganz besonders bevorzugt im Bereich von 3 bis 5.

Die Zündtemperatur von Schwefel liegt je nach Konzentration an Sauerstoff in der Gasphase und Tropfen-/Partikelgröße der möglichst fein verteilten Schwefelverbindung bei oberhalb von etwa 260°C.

Durch die Menge an pro Zeiteinheit in den Hauptgasstrom eingegebener Schwefelverbindung lässt sich die Wärmeentwicklung in jeder Verbrennungszone steuern. Dabei werden die Dosierung der Schwefelverbindung in jede Verbrennungszone und die Wärmeabfuhr zwischen den Verbrennungszonen so eingestellt, dass die maximale Temperatur in jeder Verbrennungszone 2000°C nicht übersteigt.

Das aus der Verbrennung resultierende Gasgemisch wird auf eine Temperatur von 380°C bis 450°C abgekühlt, bevor es dem Schritt (b) des erfindungsgemäßen Verfahrens zugeführt wird. Vorzugsweise erfolgt die Zugabe von Schwefel in die Verbrennungskammer und die Wärmeabfuhr zwischen den Verbrennungszonen so, dass sich in der Verbrennungskammer in Strömungsrichtung ein Temperaturgradient einstellt. So wird in einer ersten Verbrennungszone, die der Hauptgasstrom als erstes passiert, vorzugsweise der höchste Massenstrom an Schwefelverbindung eingestellt, der zu einer höchsten maximalen Temperatur in der Verbrennungskammer führt. Diese höchste maximale Temperatur beträgt 2000°C oder weniger. Die maximale Temperatur in der ersten Verbrennungsstufe liegt bevorzugt im Bereich von 1200°C bis 2000°C, besonders bevorzugt im Bereich von 1600°C bis 1900°C.

In den in Strömungsrichtung des Hauptgasstroms nachfolgenden Verbrennungszonen wird die maximale Temperatur sukzessive reduziert.

Die Temperatur des Gasgemisches liegt bei Verlassen der letzten Verbrennungszone vorzugsweise im Bereich von 500°C bis 850°C.

Die zwischen den Verbrennungszonen angeordneten Wärmetauscher setzen vorzugsweise flüssiges Wasser und/oder ein zweiphasiges Wasser-Dampfgemisch zur Kühlung ein.

In einer besonders bevorzugten Ausführungsform ist der letzten Verbrennungszone ein Wärmetauscher nachgeschaltet, der Heißdampf zur Kühlung einsetzt. Die Temperatur in der letzten Verbrennungszone wird durch den Massenstrom an zudosierter Schwefelverbindung vorzugsweise so eingestellt, dass in dem nachgeschalteten Wärmetauscher überhitzter Heißdampf zum Antreiben einer Turbine erzeugt werden kann.

Überraschend wurde festgestellt, dass die Temperatur des Gasstroms, der dem Schritt (b) des erfindungsgemäßen Verfahrens zugeführt wird, in einem vergleichsweise weiten Bereich variiert werden kann, ohne dass dies einen negativen Einfluss auf den Umsatz des erfindungsgemäßen Verfahrens hat. Daher kann die Verbrennung einer Schwefelverbindung in der letzten Verbrennungszone so durchgeführt werden, dass sich eine optimierte Energie/Wärme-Bilanz des Verfahrens ergibt.

Die Temperatur des Heißdampfes wird vorzugsweise im Bereich von 400°C bis 450°C gehalten, um die Bildung von Eisensulfid zu vermeiden.

Die Schwefelverbindung kann je nach Beschaffenheit in festem, flüssigen oder gasförmigen Zustand in die Verbrennungskammer gegeben werden. Schwefelwasserstoff wird üblicherweise in gasförmigem Zustand in die Verbrennungskammer gegeben.

Die gesamte Verbrennung der Schwefelverbindung erfolgt im Sauerstoffüberschuss. Die Sauerstoffkonzentration im Gasstrom nimmt üblicherweise entlang der Strömungsrichtung von Verbrennungszone zu Verbrennungszone ab.

Die über den Hauptgasstrom und die Dosierungsströme eingegebene Menge an Sauerstoff ist vorzugsweise so eingestellt, dass für die nachfolgende katalytische Oxidation von Schwefeldioxid zu Schwefeltrioxid in Schritt (b) kein weiterer Sauerstoff mehr zugeführt werden muss. Die für die Herstellung von Schwefelsäure benötigte Gesamtmenge an Sauerstoff wird demnach bereits vollständig in Schritt (a) des erfindungsgemäßen Verfahrens eingesetzt.

Das die Verbrennungskammer verlassende Gasgemisch enthält vorzugsweise Schwefeldioxid und Sauerstoff im Volumenverhältnis von 0,5 bis 1,5, bevorzugt von 0,8 bis 0,9.

Ein Gasgemisch mit einem Volumenverhältnis von Sauerstoff und Schwefeldioxid von bevorzugt größer als 0,8 kann dem weiter unten beschriebenen Kontaktverfahren unmittelbar zugeführt werden, ohne dass es einer Verdünnung und/oder einer Zuführung von weiterem Sauerstoff und/oder Schwefeldioxid bedarf.

Zur Kühlung und/oder Verdünnung können dem Hauptgasstrom in Schritt (a) nicht umgesetzte Mengen an Sauerstoff und/oder Schwefeldioxid aus der katalytischen Oxidation des Schwefeldioxids zu Schwefeltrioxid (Schritt (b)) nach Abtrennung des Schwefeltrioxids (Schritt (c)) zugeführt werden. Auf die Vorteile der Rückführung nicht umgesetzter Mengen an Sauerstoff und/oder Schwefeldioxid in die Verbrennungskammer wird weiter unten näher eingegangen.

Je nach in Schritt (a) eingesetzter Schwefelverbindung kann es sinnvoll oder erforderlich sein, das Gasgemisch von nicht gewünschten Bestandteilen zu befreien, bevor es der katalytischen Oxidation zu SO₃ zugeführt wird. Für den Fall der Verwendung von Schwefelwasserstoff als eingesetzte Schwefelverbindung kann beispielsweise eine Trocknung des Gases erfolgen, vorzugsweise mittels Durchleiten durch Schwefelsäure (vorzugsweise mindestens 96%ig), um das bei der Verbrennung entstandene Wasser zu entfernen, bevor das Gasgemisch der katalytischen Oxidation in Schritt (b) zugeführt wird.

Das Gasgemisch wird vorzugsweise auf eine Temperatur im Bereich von 380°C bis 450°C eingestellt, bevor es dem Schritt (b) des erfindungsgemäßen Verfahrens zugeführt wird.

In Schritt (b) des erfindungsgemäßen Verfahrens wird das in Schritt (a) gewonnene Schwefeldioxid weiter zu Schwefeltrioxid umgesetzt. Das Gasgemisch aus Schritt (a), das dem Schritt (b) zugeführt wird, enthält bereits alle Edukte (SO₂, O₂) in einem für Schritt (b) sinnvollen Verhältnis. Eine separate Zufuhr von Sauerstoff oder Schwefeldioxid ist nicht erforderlich. Auch eine Verdünnung mit einem inerten Trägergas ist nicht erforderlich. Die Umsetzung zu Schwefeltrioxid erfolgt mittels eines Kontaktverfahrens. Vorzugsweise wird ein Röhrenkontaktapparat, wie er beispielhaft in WO2008/052649A1 beschrieben ist, verwendet. Einem solchen Röhrenkontaktapparat können Kontaktgase mit einem Schwefeldioxidgehalt von bis zu 66 Vol. % zugeführt werden, da der Röhrenkontaktapparat durch eine intensive Wärmeabfuhr gekennzeichnet ist.

Um die Reaktionsrohre des Röhrenkontaktapparats erfolgt mittels eines Kühlmediums, das durch die Außenrohre geführt wird, eine kontinuierliche Wärmeabfuhr. Vorzugsweise erfolgt die Wärmeabfuhr über einen Zwischenkreislauf. Durch den Zwischenkreislauf wird die Wärme von den Reaktionsrohren abgeführt und in einem nachgeschalteten indirekten Wärmeübertrager an ein weiteres Medium zur energetischen Nutzung übertragen. Somit erfolgt beispielsweise eine energetische Nutzung zur Dampferzeugung nicht unmittelbar durch die an den Reaktionsrohren frei werdende Wärme sondern erst durch die vom Zwischenkreislauf übertragene Wärme.

Die Führung des Kühlmediums kann in Kreuz-, Gegen- oder Gleichstrom ausgeführt werden. Aufgrund des exothermen Reaktionsverlaufs ist die vorzugsweise Ausgestaltung die Gleichstromführung. Sie bietet deutliche Vorteile in Bezug auf die sichere Vermeidung von lokalen Temperaturüberschreitungen am Katalysator und bezüglich des Massenstroms des im Kreislauf zu führenden Kühlmediums.

Als Kühlmedium für die indirekte Wärmeabfuhr über den Zwischenkreislauf können grundsätzlich in Betracht gezogen werden: Wärmeträgeröle, Salzschmelzen, Salzlösungen, Dampf, Gase und/oder Luft.

Die aus dem Kühlkreislaufbetrieb im Temperaturniveau von etwa 220 °C bis 550 °C bevorzugt von 300 °C bis 450 °C abzuführende Wärme kann über einen Wärmetauscher bevorzugt als Dampf zur weiteren betrieblichen Verwendung ausgekoppelt werden.

Üblicherweise besteht der Katalysator in den Reaktionsrohren aus einem katalytisch aktiven Metall oder einem Metallderivat, das ggf. mit Promotoren versehen auf einem inerten, temperaturbeständigen Katalysatorträgermaterial aufgetragen ist. Beispielsweise ist der Katalysator V₂O₅ mit Kalium- und Natriumsalzen auf SiO₂ geträgert. Alternativ kann auch handelsüblicher mit Cäsium dotierter Vanadiumpentoxidkatalysator eingesetzt werden.

Das sich im Schritt (b) des erfindungsgemäßen Verfahrens einstellende Temperaturfenster und insbesondere Temperaturmaximum wird innerhalb festgelegter Grenzen bezüglich der Schwefeldioxidkonzentration im Wesentlichen in der Designphase festgelegt. Wesentliche Parameter für das Design sind Gaseintrittstemperatur, Gasgeschwindigkeit, Katalysatorverdünnung, Rohrgeometrie und Kühlleistung.

Die Bedingungen werden üblicherweise so gewählt, dass der Katalysator beim Einsatz eines Vanadiumpentoxidkatalysators mit oder ohne Cäsium an keiner Stelle den schädlichen Grenzwert von 640°C überschreitet. Bevorzugt werden die Bedingungen so gewählt, dass sich über die Rohrlänge ein Temperaturprofil einstellt, bei dem die Eintrittstemperatur im Bereich von 380°C bis 450°C, vorzugsweise 400°C bis 450°C und die Austrittstemperatur im Bereich von 430°C bis 500°C liegt, sowie das Temperaturmaximum nicht höher als 580 °C liegt.

Zur Verbesserung des Temperaturprofils über die Schütthöhe des Katalysators kann der Katalysator mit einem temperaturbeständigen Inertmaterial insbesondere dem reinen Katalysatorträgermaterial vermischt werden, wie z. B. mit Glas, SiO₂, Al₂O₃ oder sonstigen üblichen Oxiden, Keramik, Silicagel oder Zeolithe, bevorzugt Glas und Keramik.

Üblicherweise wird der eingesetzte Katalysator in seiner Reaktivität durch Mischen mit dem Inertmaterial im Mengenverhältnis 1:100 bis 100:1 voreingestellt. Bevorzugt werden Inertmaterial und Katalysator in Mengenverhältnissen 90:10 bis 40:60, besonders bevorzugt 80:20 bis 40:60 vermischt.

Es ist denkbar, mehrere Röhrenkontaktapparat in Reihe oder parallel geschaltet zu betreiben.

Schritt (b) erfolgt in einer einzigen Kontaktstufe, da hierdurch eine besonders kompakte Anlage realisiert werden kann. Es ist nicht notwendig, in der Kontaktstufe einen maximalen Umsatz zu realisieren (siehe unten).

Das aus dem Kontaktverfahren resultierende Gasgemisch weist ein Massenverhältnis von SO₂:SO₃ im Bereich von 1:50 bis 1:2, bevorzugt im Bereich von 1:7 bis 1:3 und ganz bevorzugt 1:6 bis 1:4 auf. Das heißt, das aus dem Kontaktverfahren resultierende Gas weist eine merkliche Restmenge an nicht umgesetztem Schwefeldioxid auf. Das Gasgemisch weist ferner Restmengen an Sauerstoff und gegebenenfalls weitere Bestandteile X auf.

Dieses Gasgemisch wird dem Schritt (c) des erfindungsgemäßen Verfahrens zugeführt.

In Schritt (c) des erfindungsgemäßen Verfahrens wird der aus Schritt (b) resultierende Gasstrom einem Absorber zugeführt, um Schwefeltrioxid vom Restgas, das nicht umgesetzte Mengen an Schwefeldioxid und Sauerstoff umfasst, zu trennen.

Das Restgas kann, ggf. nach einer Reinigung und/oder Abspaltung eines Teilstroms, prinzipiell dem Schritt (b) zugeführt, das heißt in die Kontaktanlage zurückgeführt werden. Vorzugsweise werden die in Schritt (b) nicht umgesetzten Mengen an SO₂ und O₂ dem Hauptgasstrom in Schritt (a) zugeführt. Auf die Vorteile dieser bevorzugten Ausführungsform des erfindungsgemäßen Verfahrens wird im Folgenden näher eingegangen.

Die katalytische Umsetzung von Schwefeldioxid mit Sauerstoff zu Schwefeltrioxid erfolgt in einer einzigen Kontaktstufe, die durch einen Röhrenkontaktapparat gebildet wird. Der aus dem Röhrenkontaktapparat austretende Gasstrom weist neben Schwefeltrioxid nicht umgesetzte Mengen an SO₂ und O₂ auf. Dem aus dem Röhrenkontaktapparat austretenden Gasstrom wird in Schritt (c) Schwefeltrioxid durch Absorption entzogen. Anschließend wird der Gasstrom zumindest anteilig in den Hauptgasstrom des Schritts (a) zurückgeführt. Dies dient zum einen der Kühlung des Hauptgasstromes zum anderen der Verdünnung des Reaktionsgemisches, wodurch der Temperaturanstieg in der Verbrennungskammer reduziert und besser kontrolliert werden kann.

Die Verwendung einer einzigen Kontaktstufe, in der zwar der Umsatz von SO₂ gegenüber zum Beispiel einem Doppelkontaktverfahren reduziert ist, bringt demnach überraschenderweise durch die Rückführung des nicht umgesetzten SO₂ Vorteile beim Gesamtverfahren mit sich. Durch diese bevorzugte Kombination von einer einzigen Kontaktstufe mit Rückführung des nicht umgesetzten SO₂ in die Verbrennungskammer zur Umsetzung der Schwefelverbindung können die genannten Verfahrensstufen
- Verbrennung der Schwefelverbindung,
- katalytische Oxidation von Schwefeldioxid
so aufeinander abgestimmt werden, dass ein effizientes Gesamtverfahren zur Herstellung von Schwefelsäure resultiert.

Diese Vorgehensweise ist insbesondere deswegen nicht naheliegend, weil es stets das Ziel bei der Verfahrensentwicklung ist, einen hohen Umsatz zu gewährleisten. Daher wäre man geneigt, die Umsätze der einzelnen Stufen zu maximieren, d.h. man wäre geneigt, die katalytische Umsetzung von Schwefeldioxid zum Beispiel mittels eines Doppelkontaktverfahrens zu realisieren, anstatt nur eine einzige Kontaktstufe einzusetzen. Ein optimiertes Gesamtverfahren ergibt sich im vorliegenden Fall jedoch, wenn der Umsatz einzelner Verfahrensstufen (hier der katalytischen Oxidation von Schwefeldioxid) nicht maximiert sondern bewusst kleiner gewählt wird als technisch möglich wäre.

Der Schlüssel zu einem optimierten Verfahren zur Herstellung von Schwefelsäure ausgehend von einer Schwefelverbindung wie bspw. elementarem Schwefel und/oder Schwefelwasserstoff liegt demnach in der Kombination der folgenden Merkmale:
1. Die Verbrennung der Schwefelverbindung wird mit einem Verbrennungsgas, das einen möglichst hohen Gehalt an Sauerstoff aufweist, durchgeführt. Neben der Vermeidung von Emissionen, wie sie bei der Verbrennung mit Luft auftreten, bedeutet dies einen geringeren Aufwand bei der Gasverdichtung und ermöglicht kleinere Apparateabmessungen und kleinere Rohrleitungen.
2. Die Reaktion zwischen Sauerstoff und der Schwefelverbindung wird auf mehrere einzelne Reaktionszonen verteilt. Die einzelnen Reaktionszonen sind räumlich verteilt und bilden einzelne Reaktionsräume. Zwischen diesen Reaktionsräumen sind Wärmetauscher zur Abfuhr eines Teils der entstehenden Reaktionswärme eingebracht. Dadurch ist es möglich, Sauerstoff und die Schwefelverbindung direkt zu verbrennen, ohne dass notwendigerweise große Mengen an Verdünnungsgasen zur Kühlung eingesetzt werden müssten, um den Temperaturanstieg durch die Wärmeentwicklung kontrollieren zu können. Damit lässt sich ein Gas mit einer hohen Konzentration an SO₂ am Ausgang der Verbrennungsanlage realisieren, das direkt einem Kontaktverfahren zur weiteren, katalytischen Oxidation zugeführt werden kann.
3. Die katalytische Oxidation des Schwefeldioxids erfolgt in einem Röhrenkontaktapparat, der über eine besonders intensive und effektive Wärmeabfuhr verfügt, die es erlaubt, mit besonders hohen SO₂-Volumenkonzentrationen in die Kontaktstufe zu gehen. Damit ist es auch nicht erforderlich, das aus der Verbrennungsstufe stammende Gasgemisch beispielsweise mit Inertgas, Luft oder Sauerstoff zu verdünnen.
4. Anstelle eines Doppelkontaktverfahrens erfolgt die katalytische Oxidation in einem Röhrenkontaktapparat in einer einzigen Kontaktstufe, die einen geringeren Umsatz bringt als ein Doppelkontaktverfahren, die aber wesentlich kompakter und besser regelbar ist und weniger Investitionskosten erfordert, und die eine Menge an SO₂ im Produktgasstrom belässt, die optimal zur Verdünnung und Kühlung bei der Rückführung als Hauptgasstrom in der Verbrennungsstufe der Schwefelverbindung geeignet ist.
5. Die Rückführung der nicht umgesetzten Menge an SO₂ und O₂ aus dem Kontaktverfahren in die Verbrennungskammer zur Verbrennung der Schwefelverbindung schließt den Kreis des optimierten Herstellungsverfahrens für Schwefelsäure. Wie bereits ausgeführt, dient die Rückführung zur Verdünnung/Kühlung des Verbrennungsgasstroms und natürlich zur besseren Ausnutzung der Edukte/Zwischenprodukte (O₂, SO₂).

Vorzugsweise erfolgt eine Wärmerückgewinnung an unterschiedlichen Positionen des Prozesses für das Erzeugen von Dampf, Warmwasser und/oder elektrischer Energie.

Ein weiterer Gegenstand der vorliegenden Erfindung ist eine Vorrichtung zur kontinuierlichen Herstellung von Schwefelsäure.

Die erfindungsgemäße Vorrichtung umfasst mindestens eine Verbrennungskammer zur Verbrennung einer Schwefelverbindung, einen Röhrenkontaktapparat zur katalytischen Oxidation von Schwefeldioxid zu Schwefeltrioxid, Mittel zur Absorption und/oder Kondensation von Schwefeltrioxid, Mittel zur Abgasreinigung und Mittel zur Rückführung nicht umgesetzter Mengen an Sauerstoff und Schwefeldioxid aus der katalytischen Oxidation von Schwefeldioxid zu Schwefeltrioxid in die Verbrennungskammer. Die Verbrennungskammer weist wie oben detailliert ausgeführt mehrere Verbrennungszonen aus, die durch Mittel zur Wärmeabfuhr voneinander getrennt sind. Der Röhrenkontaktapparat bildet nur eine einzige Kontaktstufe. Die Zahl der Verbrennungszonen liegt vorzugsweise im Bereich von 2 bis 8, besonders bevorzugt im Bereich von 3 bis 5.

Die Zahl der Zugabestellungen für die Schwefelverbindung pro Verbrennungszone liegt bevorzugt im Bereich von 1 bis 8, besonders bevorzugt im Bereich von 2 bis 6, ganz besonders bevorzugt im Bereich 3 bis 5.

Die Verbrennungskammer wird beispielsweise durch einen Wasserrohrkessel bereitgestellt. Wasserrohrkessel sind dem Fachmann der chemischen Verfahrenstechnik aus dem Stand der Technik (siehe z.B. Dubbel interaktiv, Taschenbuch für den Maschinenbau, L.6.1.1.) hinlänglich bekannt. Die intensive Kühlung der Wandungen sorgt dafür, dass die Wandtemperatur unterhalb der durch Eisensulfidbildung gekennzeichneten Temperatur von etwa 480°C bleibt, auch wenn in der Verbrennungskammer Temperaturen von bis zu 2000°C herrschen können.

Die Verbrennung der Schwefelverbindung kann beispielsweise mittels einem der in DE10351808A1, EP0762990B1 oder EP1295849A2 beschriebenen Brennern erfolgen.

Die Erfindung wird nachstehend anhand von Beispielen näher erläutert ohne sie jedoch hierauf zu beschränken.

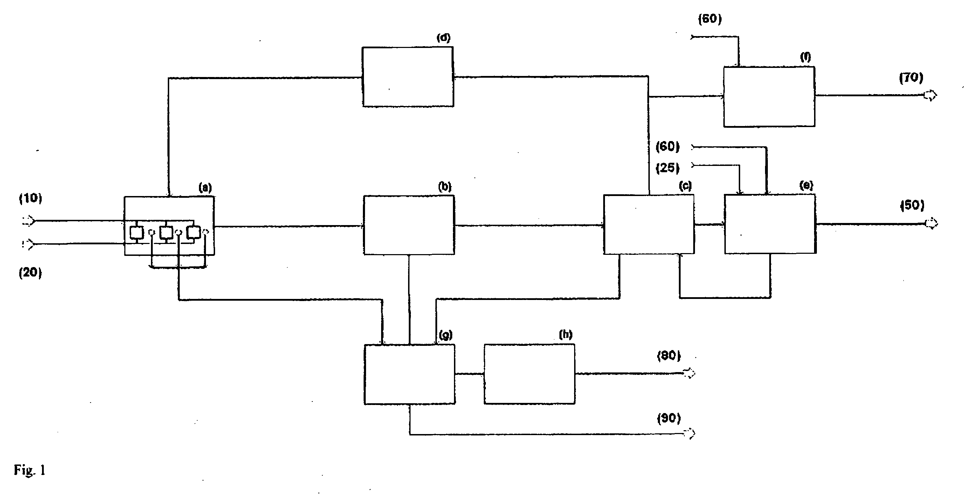

Figur 1 zeigt schematisch eine bevorzugte Ausführungsform der erfindungsgemäßen Vorrichtung als Blockschaltbild.

Die Verbrennungskammer (a) dient der Umsetzung von elementarem Schwefel 10 mit Sauerstoff 20 unter Bildung von Schwefeldioxid. Die Verbrennungskammer ist in Verbrennungszonen aufgeteilt, die durch Mittel zur Wärmeabfuhr voneinander separiert sind. Im vorliegenden Beispiel sind es drei Verbrennungszonen.

Aus der letzen Verbrennungszone der Verbrennungskammer (a) gelangt das Reaktionsgas umfassend Sauerstoff und Schwefeldioxid in einen Röhrenkontaktapparat (b) zur katalytischen Weiteroxidation des Schwefeldioxids zu Schwefeltrioxid.

Vorzugsweise weist der Röhrenkontaktapparat Reaktionsrohre mit Nenndurchmessern von 25 mm bis 150 mm, bevorzugt 50 mm bis 80 mm bei Rohrlängen von 1 m bis 12 m, bevorzugt 2 m bis 6 m auf. Die Zahl der Reaktionsrohre wird durch die zu erzielende Kapazität bestimmt und liegt üblicherweise im Bereich von 2 bis 50.000 Stück.

Für das Erzeugen von Schwefelsäure wird der aus der Oxidationsstufe (b) erhaltene Gasstrom, der hauptsächlich SO₃, SO₂ und O₂ enthält, dem Anlagenteil (c) zugeführt. Die Absorption von SO₃ erfolgt im Anlagenteil (c) vorzugsweise in hochkonzentrierter Schwefelsäure. Als flüssiges Produkt der Absorptionsstufe wird hochprozentige Schwefelsäure erhalten, aus der nach entsprechender Verdünnung, Abkühlung und Strippung in Schritt (e) die Produktsäure 50 erhalten wird.

Nicht umgesetzte Mengen an Schwefeldioxid und Sauerstoff werden über die Gasrückführung (d) zurück in die Verbrennungskammer gegeben. Dabei wird ein Teil des Gases ausgeschleust, um das Anreichern unerwünschter Nebenprodukte aus den Edukten zu verhindern. Der ausgeschleuste Teilgasstrom wird einer Abgasreinigung (f) zugeführt und verlässt schließlich als Abgas 70 die Anlage.

Die bei der Verbrennung (a), der katalytischen Oxidation (b) und der Schwefeltrioxidabsorption (c) freiwerdenden Wärmemengen werden über Zwischenkreisläufe einer Wärmerückgewinnung (g) zugeführt. Ein Teil der Wärme kann einer Energiewandlung (h) zur Gewinnung elektrischer Energie 80 zugeführt werden. Ein anderer Teil wird als Dampf und/oder Warmwasser 90 genutzt.

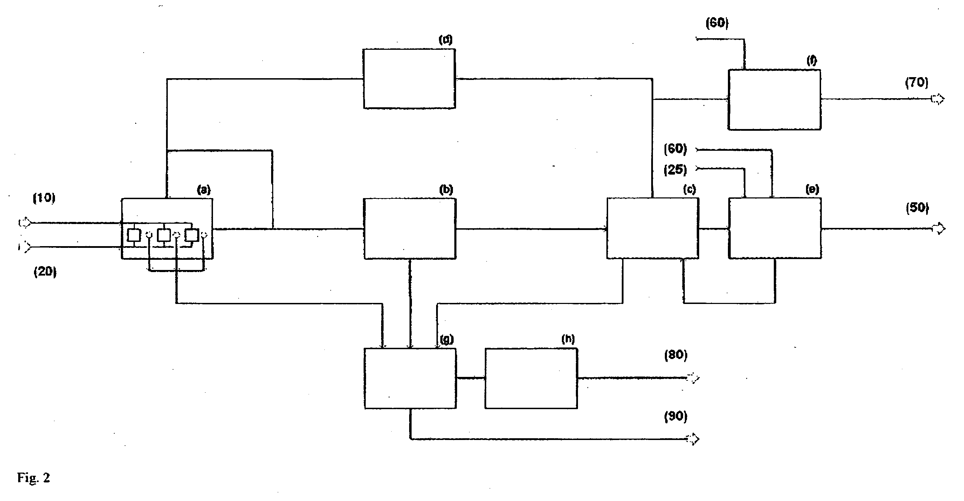

Figur 2 zeigt eine Variante der Vorrichtung aus Figur 1, bei der ein Teil des aus der Verbrennungskammer (a) stammenden Gasgemisches direkt wieder in die Verbrennungskammer zurückgeführt wird. Dies kann insbesondere für bestimmte Betriebsbedingungen zur Verbesserung der Temperaturführung sinnvoll sein.

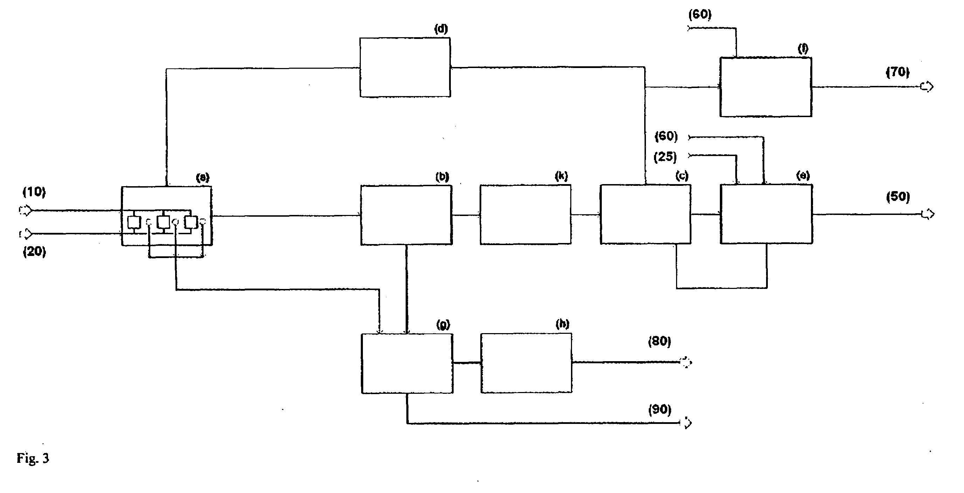

Figur 3 zeigte eine weitere Variante der Vorrichtung aus Figur 1, bei der nach der katalytischen Oxidation eine Kondensation (k) erfolgt, mit dem Vorteil das in einem Apparat flüssiges Schwefeltrioxid erhalten wird und eine mehrstufige weitere Verarbeitung nicht erforderlich ist.

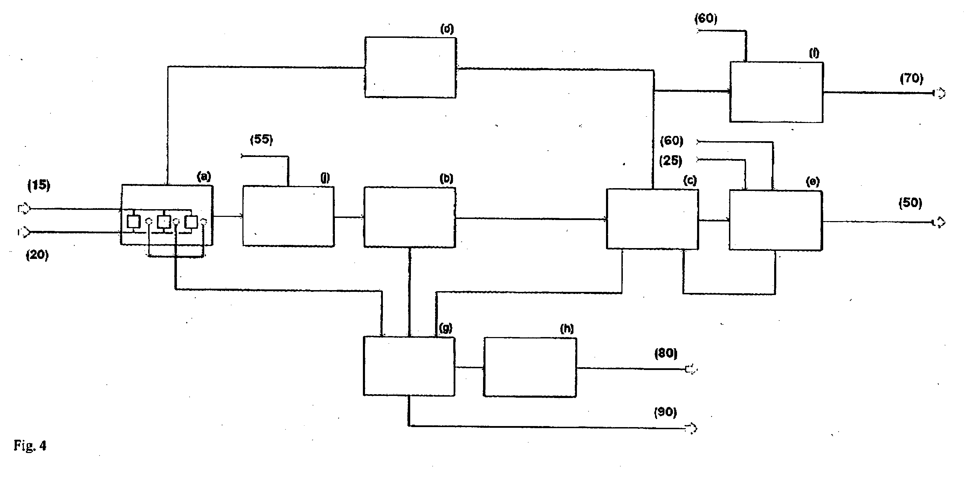

Figur 4 zeigte eine weitere bevorzugte Ausführungsform der erfindungsgemäßen Vorrichtung. Die Verbrennungskammer (a) dient hier der Verbrennung von Schwefelwasserstoff 15. Da bei der Verbrennung von Schwefelwasserstoff neben dem gewünschten Schwefeldioxid äquimolare Mengen an Wasser entstehen, kann im Anschluss an die Verbrennung eine Trocknung (j) erfolgen, vorzugsweise, indem der Gasstrom durch konzentrierte Schwefelsäure (vorzugsweise mindestens 96%ig) geleitet wird. Im Übrigen entsprechen die Anlagenteile in Figur 4 denen der Vorrichtung aus Figur 1.

Es sei angemerkt, dass die in den Figuren 1 bis 4 gezeigten Vorrichtungen auch miteinander kombinierbar sind.

Im Folgenden wird als ein Ausführungsbeispiel des erfindungsgemäßen Verfahrens das Ergebnis einer numerischen Berechnung zur Herstellung von rund 30 t/h 98,5%iger Schwefelsäure beschrieben. Das Verfahren wird in einer Anlage gemäß Fig. 1 durchgeführt.

Als Edukte werden 10 t/h Schwefel und 1,6 t/h Verbrennungsgas mit einem Volumenanteil von 99,5% Sauerstoff und 0,5% Stickstoff einem dreistufigen Brenner zugeführt, wobei für das Beispiel der Massenstrom Sauerstoff im Verhältnis 9:6:1, der Massenstrom Schwefel im Verhältnis 5,7:3,8:0,5 an die erste, zweite und dritte Stufe zugeführt wird.

Zusätzlich werden der Brennkammer 26,5 t/h rückgeführtes Gas zugeführt, das aus 73,6 Gew.-% O₂, 7,5 Gew.-% N₂, 18 Gew.-% SO₂ sowie Anteilen von SO₃ und zusätzlich sonstigen Bestandteilen besteht.

Am Ausgang der Brennkammer werden 38,1 t/h SO₂-haltigen Gasgemisches erhalten, das zu 64,9 Gew.-% SO₂, 29,2 Gew.-% O₂, 5,3 Gew.-% N₂ und zusätzlich sonstigen Bestandteilen besteht.

Das erhaltene SO₂-haltige Gasgemisch wird auf 430°C abgekühlt und dem Röhrenkontaktapparat zugeführt.

Im Röhrenkontaktapparat wird das im Gasstrom enthaltene SO₂ zu 80% umgesetzt, so dass am Ausgang des Röhrenkontaktapparates ein Gasgemisch bestehend aus 64,93 Gew.-% SO₃, 12,98 Gew.-% SO₂, 16,19 Gew.-% O₂ und zusätzlich sonstigen Bestandteilen mit einer Temperatur von 500°C vorliegt.

Nach Durchlaufen eines Economizers wird das Gasgemisch mit einer Temperatur von 199°C einem Venturi-Wäscher zugeführt. Im dem Venturi wird der Hauptanteil des SO₃-Gases absorbiert.

Die restliche SO₃-Absorption erfolgt in einer nachgeschalteten Absorptionskolonne Das Sumpfprodukt des Venturiwäschers wird über einen Wärmeübertrager geführt und mit dem Sumpfprodukt der Absorptionskolonne zusammengeführt. Der Sumpf der Absorptionskolonne ist gleichzeitig die Pumpvorlage für die Berieselung der Kolonne und die Abgabe der Produktionssäure

Nachdem der gesamte Flüssigkeitsstrom in einem Wärmeübertrager auf 90°C abgekühlt ist, werden 30,75 t/h mit einem Massenanteil von 98,5 Gew.-% H₂SO₄ ausgespeist und als Produkt erhalten.

Die nicht absorbierten Bestandteile der Gasphase werden im Kreislauf über ein Gebläse zur Verbrennungskammer zurückgeführt und vor der Einspeisung mit 13,6 t/h Sauerstoff angereichert.

Aus der zur Energierückgewinnung eingesetzten Abwärme werden in einer Kondensationsturbine rd. 10,5 MW für das Erzeugen von el. Energie zurückgewonnen. Zusätzlich entstehen nach Abzug der im Prozess benötigten Energien 8,5 t/h 6bar-Dampf zur Abgabe.

### Bezugszeichen

(a) Verbrennungsanlage
(b) Röhrenkontaktapparat zur katalytischen Oxidation von Schwefeldioxid
(c) Mittel zur Absorption von Schwefeltrioxid
(d) Mittel zur Gasrückführung
(e) Mittel zur Konditionierung (Verdünnen, Strippen)
(f) Mittel zur Abgasreinigung
(g) Mittel zur Wärmerückgewinnung
(h) Mittel zur Energiewandlung
(j) Mittel zur Gastrocknung
(k) Mittel zur Kondensation von Schwefeltrioxid

- 10: Zufuhr von Schwefel
- 15: Zufuhr von Schwefelwasserstoff
- 20: Zufuhr von Sauerstoff
- 25: Zufuhr von Sauerstoff
- 50: Schwefelsäureprodukt
- 55: Schwefelsäure zur Trocknung
- 60: Zufuhr von Wasser
- 70: Abgas
- 80: elektrische Energie
- 90: Dampf, Warmwasser

## Patentansprüche

1. Kontinuierliches Verfahren zur Herstellung von Schwefelsäure ausgehend von elementarem Schwefel und/oder einer Schwefelverbindung und einem sauerstoffhaltigen Verbrennungsgas, umfassend die Schritte:
(a) Umsetzen des elementaren Schwefels und/oder der Schwefelverbindung mit einem Verbrennungsgas enthaltend Sauerstoff in einer Verbrennungskammer unter Bildung von Schwefeldioxid,
(b) katalytische Oxidation des Schwefeldioxids aus Schritt (a) unter Bildung von Schwefeltrioxid,
(c) Absorption und/oder Kondensation des Schwefeltrioxids aus Schritt (b) in Schwefelsäure, **dadurch gekennzeichnet, dass** die Umsetzung des elementaren Schwefels und/oder der Schwefelverbindung mit dem Verbrennungsgas enthaltend Sauerstoff in Schritt (a) in mehreren Zonen innerhalb der Verbrennungskammer stattfindet, wobei zwischen den Zonen Reaktionswärme aus der Umsetzung der Schwefelverbindung mit dem Verbrennungsgas enthaltend Sauerstoff abgeführt wird, so dass die Temperatur innerhalb der Verbrennungskammer 2000°C nicht übersteigt, dass Schritt (b) in einem Röhrenkontaktapparat in einer einzigen Kontaktstufe ausgeführt wird und ein Teil des nach der Absorption des Schwefeltrioxids in Schritt (c) resultierenden Gasstroms, der nicht umgesetzte Mengen an Schwefeldioxid und Sauerstoff enthält, in die Verbrennungskammer des Schritts (a) zurückgeführt wird, und wobei das Massenverhältnis von O₂ zu nicht für die Schwefelsäureherstellung nutzbaren Bestandteilen in dem Gasgemisch, das der Verbrennungskammer zugeführt wird, mindestens 30:70 beträgt.

2. Verfahren nach Anspruch 1, **dadurch gekennzeichnet, dass** in Schritt (a) einem Hauptgasstrom enthaltend Sauerstoff und Schwefeldioxid über mehrere Zugabestellen innerhalb der Verbrennungskammer der elementare Schwefel und/oder die Schwefelverbindung zugeführt wird und die Verbrennung in mehreren Zonen durchgeführt wird, die durch Wärmeübertrager voneinander separiert sind.

3. Verfahren nach Anspruch 2, **dadurch gekennzeichnet, dass** die Temperaturen der Verbrennungszonen in Richtung des Hauptgasströms abnehmen.

4. Verfahren nach einem der Ansprüche 1 bis 3, **dadurch gekennzeichnet, dass** das die Verbrennungskammer nach Schritt (a) verlassende Gasgemisch Sauerstoff und Schwefeldioxid im Volumenverhältnis von 0,5 bis 1,5 enthält.

5. Verfahren nach einem der Ansprüche 1 bis 4, **dadurch gekennzeichnet, dass** das aus Schritt (a) resultierende Gasgemisch nach Abkühlung auf eine Temperatur im Bereich von 380 bis 450°C ohne Zusatz weiterer Gase einer Kontaktstufe zugeführt wird, in der Schritt (b) ausgeführt wird.

6. Verfahren nach einem der Ansprüche 1 bis 5, **dadurch gekennzeichnet, dass** die an unterschiedlichen Positionen des Verfahrens freiwerdende Wärme für das Erzeugen von Dampf, Warmwasser oder elektrischer Energie eingesetzt wird.

7. Vorrichtung zur kontinuierlichen Herstellung von Schwefelsäure mindestens umfassend eine Verbrennungskammer zur Verbrennung von elementarem Schwefel und/oder Schwefelverbindungen, einen Röhrenkontaktapparat zur katalytischen Oxidation von Schwefeldioxid zu Schwefeltrioxid, Mittel zur Absorption und Kondensation von Schwefeltrioxid, Mittel zur Abgasreinigung und Mittel zur Rückführung eines Teils des nach der Absorption des Schwefeltrioxids resultierenden Gasstroms enthaltend nicht umgesetzte Mengen an Sauerstoff und Schwefeldioxid aus der katalytischen Oxidation von Schwefeldioxid zu Schwefeltrioxid in die Verbrennungskämmer, wobei die Verbrennungskammer über eine Mehrzahl an Verbrennungszonen verfügt, die durch Mittel zur Wärmeabfuhr voneinander getrennt sind, **dadurch gekennzeichnet, dass** der Röhrenkontaktapparat nur eine einzige Kontaktstufe bildet.

8. Vorrichtung nach Anspruch 7, **dadurch gekennzeichnet, dass** die Zahl der Verbrennungszonen im Bereich von 3 bis 16 liegt.

## Claims

1. Continuous process for preparing sulphuric acid from elemental sulphur and/or a sulphur compound and an oxygen-containing combustion gas, which comprises the steps:
(a)reaction of the elemental sulphur and/or the sulphur compound with a combustion gas containing oxygen in a combustion chamber to form sulphur dioxide,
(b)catalytic oxidation of the sulphur dioxide from step (a) to form sulphur trioxide,
(c)absorption and/or condensation of the sulphur trioxide from step (b) in sulphuric acid,
**characterized in that** the reaction of the elemental sulphur and/or the sulphur compound with the combustion gas containing oxygen in step (a) takes place in a plurality of zones within the combustion chamber, with heat of reaction from the reaction of the sulphur compound with the combustion gas containing oxygen being removed between the zones so that the maximum temperature within the combustion chamber does not exceed 2000°C, **in that** step (b) is carried out in a tube contact apparatus in a single contact stage and part of the gas stream resulting after absorption of the sulphur trioxide in step (c), which contains unreacted amounts of sulphur dioxide and oxygen, is recirculated to the combustion chamber of step (a), and the mass ratio of O₂ to constituents which are not useable for sulphuric acid production in the gas mixture which is fed to the combustion chamber is at least 30:70.

2. Process according to Claim 1, **characterized in that**, in step (a), the elemental sulphur and/or the sulphur compound is introduced into a main gas stream containing oxygen and sulphur dioxide via a plurality of points of introduction within the combustion chamber and the combustion is carried out in a plurality of zones which are separated from one another by heat exchangers.

3. Process according to Claim 2, **characterized in that** the temperatures of the combustion zones decrease in the direction of the main gas stream.

4. Process according to any of Claims 1 to 3, **characterized in that** the gas mixture leaving the combustion chamber after step (a) contains oxygen and sulphur dioxide in a volume ratio of from 0.5 to 1.5.

5. Process according to any of Claims 1 to 4, **characterized in that** the gas mixture resulting from step (a) is cooled to a temperature in the range from 380 to 450°C and then fed without addition of further gases to a contact stage in which step (b) is carried out.

6. Process according to any of Claims 1 to 5, **characterized in that** the heat liberated at various positions in the process is used for generating steam, hot water or electric energy.

7. Apparatus for the continuous preparation of sulphuric acid, which comprises at least one combustion chamber for combustion of elemental sulphur and/or sulphur compounds, a tube contact apparatus for the catalytic oxidation of sulphur dioxide to sulphur trioxide, means for absorption and condensation of sulphur trioxide, means for offgas purification and means for recirculation of part of the gas stream which results after the absorption of the sulphur trioxide and contains unreacted amounts of oxygen and sulphur dioxide from the catalytic oxidation of sulphur dioxide to sulphur trioxide to the combustion chamber, wherein the combustion chamber has a plurality of combustion zones which are separated from one another by means for removal of heat, **characterized in that** the tube contact apparatus forms only a single contact stage.

8. Apparatus according to Claim 7, **characterized in that** the number of combustion zones is in the range from 3 to 16.

## Revendications

1. Procédé continu pour la préparation d'acide sulfurique partant de soufre élémentaire et/ou d'un composé soufré et d'un gaz de combustion contenant de l'oxygène, comprenant les étapes consistant à :
(a) transformer le soufre élémentaire et/ou le composé soufré avec un gaz de combustion contenant de l'oxygène dans une chambre de combustion avec formation de dioxyde de soufre,
(b) oxyder par voie catalytique le dioxyde de soufre de l'étape (a) avec formation de trioxyde de soufre,
(c) absorber et/ou condenser le trioxyde de soufre de l'étape (b) dans de l'acide sulfurique,
**caractérisé en ce que** la transformation du soufre élémentaire et/ou du composé soufré avec le gaz de combustion contenant de l'oxygène dans l'étape (a) a lieu en plusieurs zones dans la chambre de combustion, la chaleur de réaction de la transformation du composé soufré avec le gaz de combustion contenant de l'oxygène étant évacuée entre les zones de manière telle que la température dans la chambre de combustion ne dépasse pas 2000°C, **en ce que** l'étape (b) est réalisée dans un appareil tubulaire de contact dans un seul étage de contact et une partie du flux gazeux résultant après l'absorption du trioxyde de soufre dans l'étape (c), qui contient des quantités non transformées de dioxyde de soufre et d'oxygène, est recyclée dans la chambre de combustion de l'étape (a) et le rapport massique d'ou aux constituants non utilisables pour la préparation d'acide sulfurique dans le mélange gazeux, qui est introduit dans la chambre de combustion, valant au moins 30:70.

2. Procédé selon la revendication 1, **caractérisé en ce que**, dans l'étape (a), le soufre élémentaire et/ou le composé soufré est/sont introduit(s) dans un flux gazeux principal contenant de l'oxygène et du dioxyde de soufre via plusieurs sites d'alimentation dans la chambre de combustion et la combustion est réalisée dans plusieurs zones, qui sont séparées les unes des autres par des dispositifs de transfert de chaleur.

3. Procédé selon la revendication 2, **caractérisé en ce que** les températures des zones de combustion diminuent dans le sens du flux gazeux principal.

4. Procédé selon l'une quelconque des revendications 1 à 3, **caractérisé en ce que** le mélange gazeux quittant la chambre de combustion après l'étape (a) contient de l'oxygène et du dioxyde de soufre dans un rapport volumique de 0,5 à 1,5.

5. Procédé selon l'une quelconque des revendications 1 à 4, **caractérisé en ce que** le mélange gazeux résultant de l'étape (a) est introduit, après refroidissement à une température dans la plage de 380 à 450°C, sans addition d'autres gaz, dans un étage de contact dans lequel l'étape (b) est réalisée.

6. Procédé selon l'une quelconque des revendications 1 à 5, **caractérisé en ce que** la chaleur libérée en différentes positions du procédé est utilisée pour la production de vapeur, d'eau chaude ou d'énergie électrique.

7. Dispositif pour la préparation continue d'acide sulfurique comprenant au moins une chambre de combustion pour brûler du soufre élémentaire et/ou des composés soufrés, un appareil tubulaire de contact pour l'oxydation catalytique de dioxyde de soufre en trioxyde de soufre, des moyens pour l'absorption et la condensation de trioxyde de soufre, des moyens pour l'épuration d'effluents gazeux et des moyens pour le recyclage d'une partie du flux gazeux résultant après l'absorption du trioxyde de soufre, contenant des quantités non transformées d'oxygène et de dioxyde de soufre de l'oxydation catalytique du dioxyde de soufre en trioxyde de soufre, dans la chambre de combustion, la chambre de combustion disposant d'une pluralité de zones de combustion qui sont séparées par des moyens pour l'évacuation de chaleur, **caractérisé en ce que** l'appareil tubulaire de contact ne forme qu'un seule étage de contact.

8. Dispositif selon la revendication 7, **caractérisé en ce que** le nombre de zones de combustion se situe dans la plage de 3 à 16.
